# EUROPÄISCHE PATENTSCHRIFT

(11) **EP 0 183 151 B1**
(45) Veröffentlichungstag und Bekanntmachung des Hinweises auf die Patenterteilung: **20.01.1988**
(21) Anmeldenummer: 85114569.8
(22) Anmeldetag: 16.11.1985
(51) Int. Cl.: C09B 29/045, D06P 1/39

(54) **Monoazofarbstoffe**
Monoazo dyes
Colorants monoazoiques

(30) Priorität: 29.11.1984 DE 3443595
(43) Veröffentlichungstag der Anmeldung: 04.06.1986
(73) Patentinhaber: BAYER AG, 51368 Leverkusen (DE)
(72) Erfinder: Fürstenwerth, Hauke, Dr., D-5000 Köln 80 (DE); Schündehütte, Karl Heinz, Prof. Dr., D-5090 Leverkusen 3 (DE)

(56) Entgegenhaltungen:
- DE-A- 2 033 281
- FR-A- 2 125 457
- FR-A- 2 135 265
- US-A- 4 149 851

## Beschreibung

Die vorliegende Erfindung betrifft wasserlösliche Monoazofarbstoffe, die in der Form der freien Säure der Formel 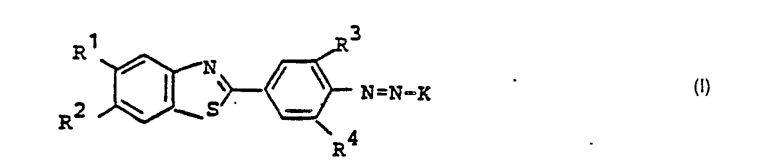 oder einer tautomeren Form derselben entsprechen, worin
R¹, R² = H oder SO₃H
R³, R⁴ = H, Alkyl, Alkoxy, Halogen und
K = Rest einer Kupplungskomponente bedeuten, mit der Maßgabe, daß R₁ und R₂ verschieden sind, sowie ihre Herstellung, Verwendung und die damit gefärbten und bedruckten Materialien.

Die Farbstoffe fallen im allgemeinen in Form ihrer Alkalisalze, insbesondere Li- oder Na-Salze oder der Ammoniumsalze an und werden im allgemeinen auch in dieser Form eingesetzt.

Im Rahmen der vorliegenden Erfindung werden Monoazofarbstoffe der allgemeinen Formel (I) bevorzugt, von denen K = Rest einer enolischen Kupplungskomponente, insbesondere einer solchen der Acetessigarylid-, Pyrazolon-, Aminopyrazol-, Pyrazolobenzimidazol-, Pyridon- oder Barbitursäurereihe.

Besonders bevorzugt sind Monoazofarbstoffe der Formel (I), worin
R¹ = SO₃H
_{R}2, R³ = H
_{R4 = H}, _{CH3}, _{OCH3} oder Cl und
K einen Rest der Formel (II) 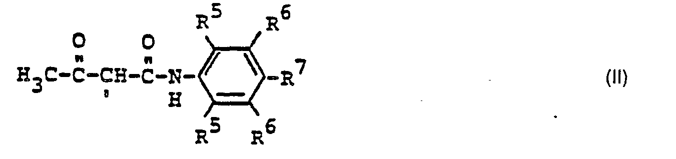 bedeuten, worin
R₅, R₆ = H, C₁-C₄-Alkoxy, insbesondere OCH₃, OC₂H_{5'} C₁-C₄-Alkyl, insbesondere CH₃, CI, SO₃H und
R₇ = H, S0₃H, C₁-C₄-Alkoxy, insbesondere OCH₃, Alkylamino, insbesondere C₁-C₄-Alkylcarbony- lamino oder ―NHCO―CH―COCH₃ bedeuten.

Ebenfalls bevorzugt sind Farbstoffe der Formel (I), worin
R¹ = SO₃H
R², R³ = H
R⁴ = H, CH₃, OCH₃ oder CI und
K einen Rest der Formel 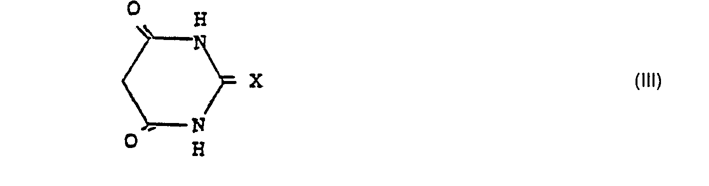 bedeuten, worin X = O, NH oder N-CN.

Weitere bevorzugte Farbstoffe sind solche der Formel 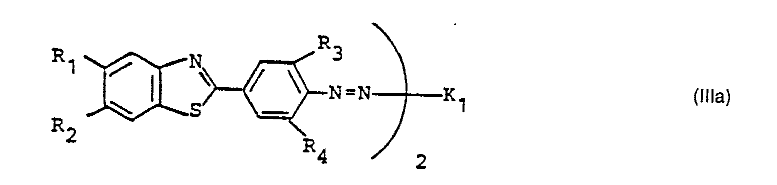 worin 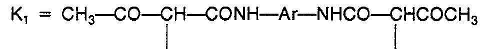 und
Ar = Arylen, insbesondere gegebenenfalls substituiertes Phenylen, insbesondere Monosulfophenylen.

In diesen Farbstoffen können die Phenylbenzthiazolreste gleich oder verschieden sein.

Die erfindungsgemäßen Farbstoffe der Formel (I) können durch Diazotierung von Diazokomponenten der Formel 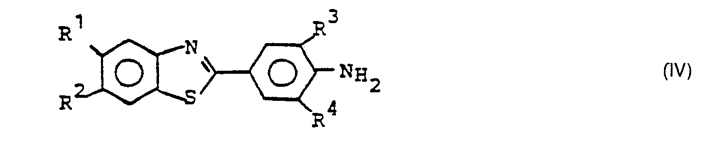 und Kupplung auf einer Kupplungskomponente der Formel 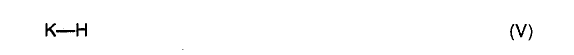 hergestellt werden, wobei R^{l}, R², R³, R⁴ und K die in der Formel (I) angegebene Bedeutung haben.

Die Kupplung wird normalerweise in pH-Bereich von 2 bis 12, vorzugsweise 3 bis 9, und bei Temperaturen von -10 °C bis + 50 °C, vorzugsweise 0 bis 30 °C, durchgeführt, wobei als Reaktionsmedium Wasser bevorzugt ist. Im wäßrigen Reaktionsmedium können jedoch gegebenenfalls einwertige oder mehrwertige Alkohole, beispielsweise Methanol, Ethanol, Isopropanol, n-Propanol, Ethylenglykol, Diethylenglykol, Triethylenglykol, Polyethylenglykol, Glycerin, Pentaerythrit, Mannit, Sorbit, 1,2-Propylenglykol, 1,3-Propylenglykol, 1,2-, 2,3- und 1,4-Butylenglykol, Polypropylenglykol, Polyvinylalkohol, 1,6-Hexylenglykol, Ethylenglykolalkylether, Diethylenglykolalkylether, Triethylenglykolalkylether, Polyethylenglykolalkylether, jeweils insbesondere mit 1 bis 4 C-Atomen im Alkylrest, oder amidische Verbindungen, beispielsweise Formamid, Dimethylformamid, e-Caprolactam, Pyrrolidon, N-Alkylpyrrolidone mit 1 bis 4 C-Atomen im Alkylrest, Harnstoff, Thioharnstoff oder Amine beispielsweise Pyridin, Ethanolamin, Diethanolamin, Triethanolamin, zur Beschleunigung der Diazotierungs- und/oder Kupplungsreaktionen zugegen sein.

'Die erfindungsgemäßen Monoazofarbstoffe der allgemeinen Formel eignen sich hervorragend zum Färben und Bedrucken von hydroxylgruppenhaltigen oder stickstoffhaltigen natürlichen oder synthetischen Materialien, insbesondere von textilen Fasermaterialien, wie Baumwolle, Regeneratcellulose, Polyamid, Seide, Wolle sowie von Papierholz, Leder und als Schreibmaterial.

Die erfindungsgemäßen Monoazofarbstoffe können in Pulver- oder Granulatform, jedoch aufgrund ihrer hervorragenden Wasserlöslichkeit auch in Form konzentrierter wäßriger Lösungen zum Färben der genannten textilen oder nichttextilen natürlichen oder synthetischen Fasermaterialien eingesetzt werden. Die konzentrierten wäßrigen Lösungen enthalten dabei normalerweise 10 bis 30 Gew.-%, vorzugsweise 10 bis 20 Gew.-% Reinfarbstoff.

Zur Einstellung konzentrierter, lagerstabiler Lösungen werden an sich bekannte hydrotrope Verbindungen, beispielsweise aus der Reihe der hydrotropen Salze, wie Natriumbenzoat, benzolsulfonsäures Natrium, p-toluolsulfonsaures Natrium, xylolsulfonsaures Natrium, N-benzylsulfanilsaures Natrium, oder der amidischen, carbonylgruppenhaltigen Verbindungen, beispielsweise Formamid, Dimethylformamid, Acetamid, -Caprolactam, N-Methylpyrrolidon, Harnstoff, Thioharnstoff, oder der Alkohole, beispielsweise Ethanol, n-Propanol, Isopropanol, Ethylenglykol, Diethylenglykol, Triethylenglykol, Polyethylenglykol, Polypropylenglykol, 1,2-Propylenglykol, 1,3-Propylenglykol, 1,3-Butylenglykol, 2,3-Butylenglykol, 1,4-Butylenglykol, 2,3-Diethylpropandiol-(1,3), 1,6-Hexylenglykol, 3-Methyl- und 2-Methyl-hexylenglykol-(1,6), 2-Methylpentandiol-(2,4), 2-Ethyl-hexandiol-(1,3), 2,2-Dimethylhexandiol-(1,3), Diethylenglykolalkylether, Ethylenglykolalkylether, Triethylenglykolalkylether, Polyethylenglykolalkylether, jeweils insbesondere mit 1 bis 4 C-Atomen im Alkylrest, oder der Amine, wie Pyridin, Monoethanolamin, Diethanolamin, Triethanolamin eingesetzt. Hydrotrope Verbindungen sind beispielsweise beschrieben in H. Rath und S. Müller, Melliand Textilberichte 40 (1959), 787 oder bei K. Venkataraman : « The Chemistry of Synthetic Dyes », Vol. VII, Seiten 86 bis 92 (1974) und in der zitierten Literatur. Bevorzugte hydrotrope Mittel, die sich zur Einstellung lagerstabiler, konzentrierter Lösungen der erfindungsgemäßen Farbstoffe eignen, sind amidische Verbindungen, insbesondere Harnstoff und/oder -Caprolactam und mehrwertige Alkohole, insbesondere Alkylenglykole mit 2 bis 6 C-Atomen in der Alkylenkette oder Gemische dieser Verbindungen. Normalerweise enthalten die konzentrierten, lagerstabilen Lösungen 5 bis 40 Gew.-%, vorzugsweise 10 bis 30 Gew.-% einer oder mehrerer hydrotroper Verbindungen.

In den konzentrierten Lösungen bzw. den Pulver- oder Granulatformen der erfindungsgemäßen Farbstoffe können an sich bekannte Hilfsmittel, wie z. B. Tenside, die sich zur besseren Benetzbarkeit und/oder Löslichkeitsverbesserung von Direktfarbstoffen eignen, zugegen sein. Als Tenside kommen Aniontenside, Amphotenside oder nichtionogene Tenside in Betracht, wie sie z. B. beschrieben sind in a) Ullmanns Enzyklopädie der technischen Chemie, 3. Auflage, Band 16 (1965), Seiten 724 bis 748 ; b) J.L. Moillet, B. Collic und W. Black in « Surface Activity », 2. Auflage, Kap. 10 bis 15 ; c) E.H. Daruwalla in K. Venkataraman « The Chemistry of Synthetic Dyes », Vol. VII (1974), Seiten 86 bis 92.

Bei der Herstellung von konzentrierten lagerstabilen wäßrigen Lösungen der erfindungsgemäßen Farbstoffe ist die Isolierung der Farbstoffpreßkuchen bzw. Farbstoffpulver und ihre anschließende Auflösung in Wasser nicht unbedingt erforderlich. Konzentrierte wäßrige Lösungen können auch dadurch erhalten werden, daß man eine oder mehrere Diazokomponenten der Formel 11 zunächst diazotiert und dann mit einer oder mehrerer Kupplungskomponente der Formel III vereinigt oder daß man ein wäßriges Gemisch einer Diazokomponente der Formel II mit einer Kupplungskomponente der Formel III mit Alkalinitrit umsetzt. Dabei kann man auch ein Diazokomponenten- und/oder Kupplungskomponentengemisch einsetzen. Diazokomponente, Kupplungskomponente und Alkalinitrit werden dabei etwa im Molverhältnis 1 : 1 : 1 eingesetzt. Der Zusatz einer zusätzlichen Säure ist nicht erforderlich, jedoch ist die Zugabe von Eis zur kühlung zweckmäßig. Die Reaktionstemperaturen betragen normalerweise 0 bis 30 °C, vorzugsweise 15 bis 25 °C.

Bei diesen Verfahren müssen, an sich bekannte hydrotrope Verbindungen und/oder Tenside, beispielsweise der bereits genannten Art, während der Diazotierungs- und/oder Kupplungsreaktionen oder nach erfolgter Kupplung zugesetzt werden. Bevorzugte hydrotrope Mittel zur Herstellung konzentrierter Lösungen nach diesen Verfahren stammen aus der Reihe der amidischen hydrotropen Mittel, insbesondere Harnstoff und/oder e-Caprolactam, und der mehrwertigen Alkohole, insbesondere Alkylenglykole mit 2 bis 6 C-Atomen im Alkylenrest oder Gemische dieser Verbindungen. Auch nach den zuletzt genannten Verfahren lassen sich konzentrierte lagerstabile wäßrige Farbstofflösungen herstellen, die etwa 10 bis 30 Gew.-%, vorzugsweise 10 bis 20 Gew.-% Reinfarbstoff und 5 bis 40 Gew: %, vorzugsweise 10 bis 30 Gew.-% einer oder mehrerer hydrotropen Verbindungen enthalten.

Die Kupplungskomponenten der Formel V sind literaturbekannte Verbindungen. Die Diazokomponenten der Formel IV sind neu. Sie können hergestellt werden, indem man z. B. einen Aminobenzaldehyd der Formel 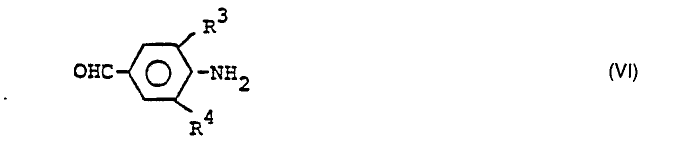 mit einem Aminothiophenol der Formel 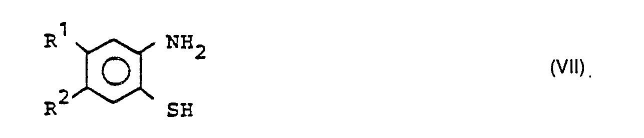 in an sich bekannter Weise umsetzt, z. B. Kondensation in konzentrierte Salzsäure bei Siedetemperatur und anschließender Salzbildung bzw. durch Behandlung des isolierten Reaktionsprodukts mit Ammoniak.

Als Diazokomponente können zur Herstellung der erfindungsgemäßen Azofarbstoffe beispielsweise eingesetzt werden :

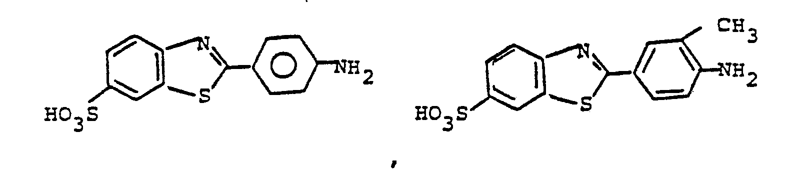

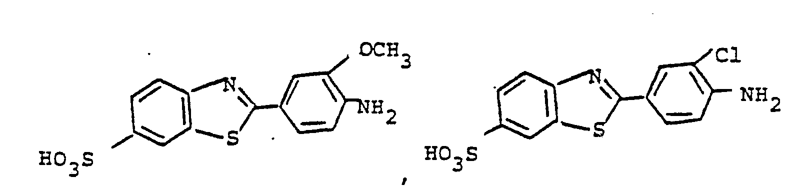

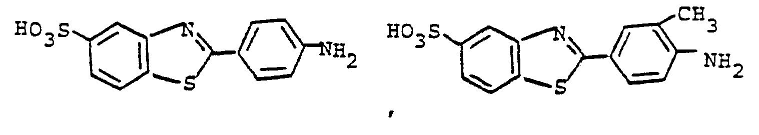

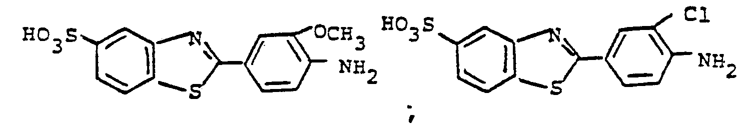

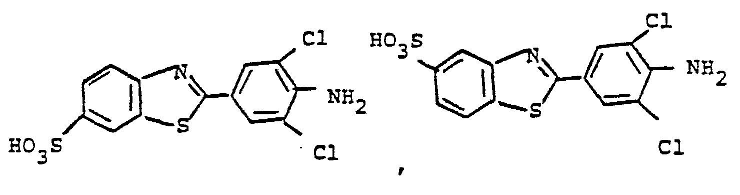

Als Kupplungskomponente können beispielsweise eingesetzt werden :

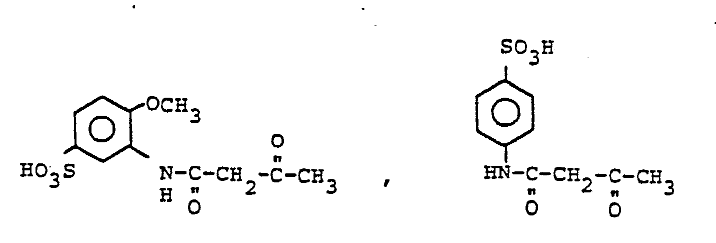

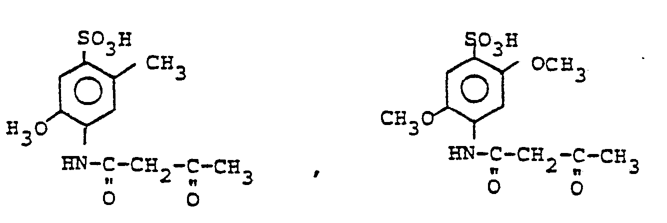

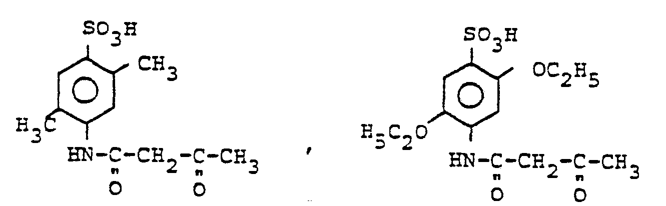

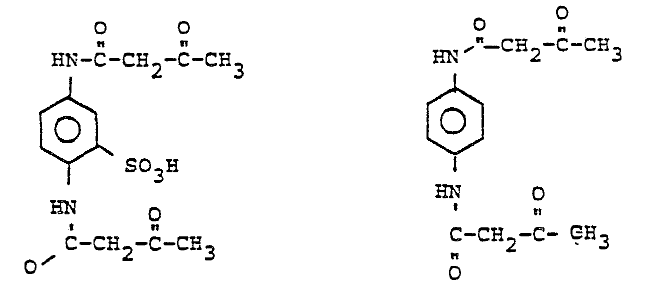

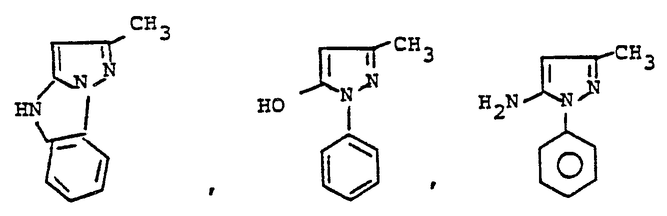

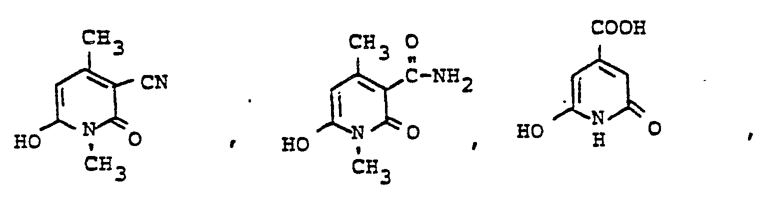

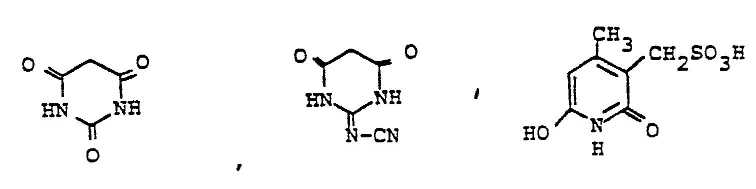

In den folgenden Beispielen bedeuten Prozente Gewichtsprozente, die Temperaturen sind in Celsiusgraden angegeben.

### Beispiel 1

10 g des Natriumsalzes der 2-(4'-Aminophenyl)-benzthiazol-5-sulfonsäure werden in 100 ml Wasser warm gelöst und mit 2,3 g Natriumnitrit versetzt. Die erhaltene Mischung läßt man langsam zu einem gut gerührten Gemisch aus 10 g 32 %iger wäßriger Salzsäure und 50 ml Wasser zulaufen. Man läßt ca. 2 Stunden bei 20 °C-25 °C nachrühren und entfernt dann überschüssige salpetrige Säure mit Amidosulfonsäure. Die Suspension der Diazoverbindung läßt man anschließend zu einer mit Natronlauge neutral gestellten Mischung aus 5,5 g Cyaniminobarbitursäure und 60 ml Wasser zulaufen. Zur Vervollständigung der Kupplungsreaktion stellt man mit Natronlauge den pH des Gemisches auf 6 und rührt mehrere Stunden nach. Der Farbstoff der Formel 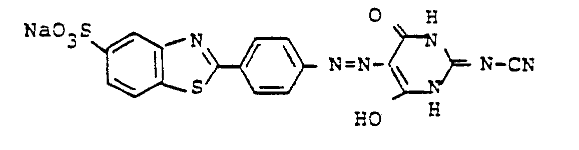 wird isoliert und getrocknet. Man erhält 16 g eines orangefarbenen Pulvers, das Papier in brillanten, leicht grünstichig-gelben Tönen mit ausgezeichneten Echtheiten färbt.

Zu Farbstoffen mit ähnlich guten Echtheiten gelangt man, wenn man anstelle der 2-(4'-Aminophenyl)-benzthiazol-5-sulfonsäure folgende Diazokomponente einsetzt :

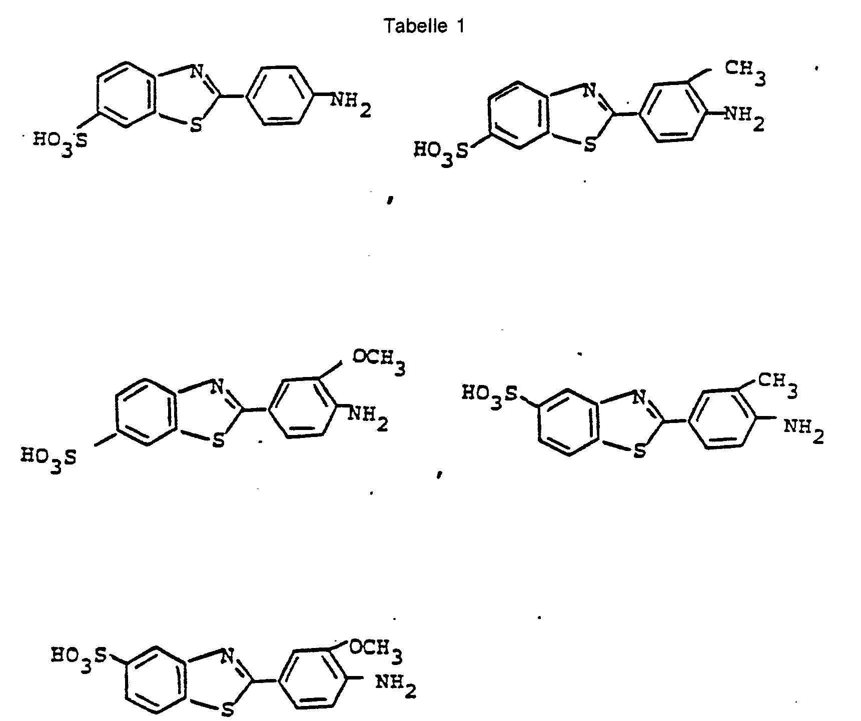

### Beispiel 2

10 g des Natriumsalzes der 2-(4'-Aminophenyl)-benzthiazol-5-sulfonsäure werden wie im Beispiel 1 beschrieben diazotiert. Die Suspension der Diazoverbindung läßt man bei 15°-20° zu einer mit Natronlauge neutral gestellten Mischung aus 4 g Barbitursäure und 100 ml Wasser zulaufen. Mit Natronlauge wird auf pH 6 gestellt. Man läßt mehrere Stunden nachrühren. Nach Isolieren und Trocknen erhält man 14 g Farbstoff der Formel

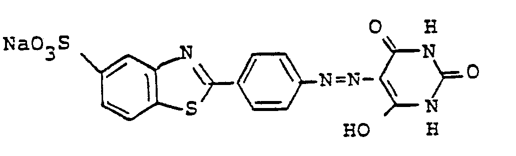

Dieser Farbstoff färbt Papier in brillanten grünstichiggelben Tönen mit hervorragenden Echtheiten.

Zu Farbstoffen mit ähnlichen Eigenschaften gelangt man, wenn anstelle der 2-(4'-Aminophenyl)-benzthiazol-5-sulfonsäure die in Tabelle 1 aufgeführten Diazokomponenten eingesetzt werden.

### Beispiel 3

10 g Natriumsalz der 2-(4'-Aminophenyl)-benzthiazol-5-sulfonsäure werden wie in Beispiel 1 beschrieben diazotiert und auf 10 g 2,5-Di-(acetoacetylamino)-benzolsulfonsäure gekuppelt. Man erhält 25 g Farbstoff der Formel

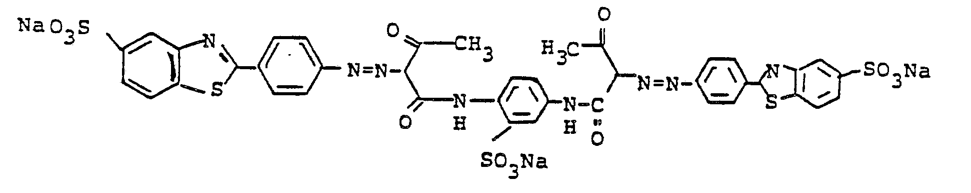

Dieser Farbstoff färbt Papier in klaren grünstichiggelben Nuancen mit sehr guten Echtheiten.

Zu ähnlich guten Farbstoffen gelangt man, wenn man die Diazokomponente der Tabelle 1 auf die in Beispiel 3 eingesetzte Kupplungskomponente kuppelt.

### Beispiel 4

10 g Natriumsalz der 2-(4'-Aminophenyl)-benzthiazol-5-sulfonsäure werden wie in Beispiel 1 beschrieben diazotiert und auf 8 g 3-Acetoacetylamino-4-methoxybenzolsulfonsäure gekuppelt. Man erhält 20 g Farbstoff der Formel 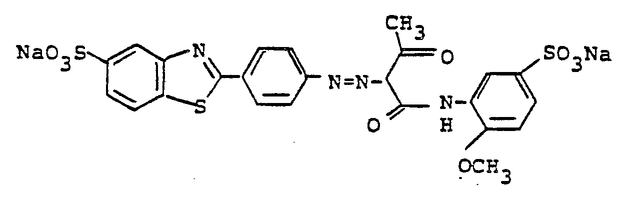 welcher.Papier in grünstichig-gelben Nuancen mit guten Echtheiten färbt.

Analoge Farbstoffe erhält man, wenn man die in Tabelle 1 aufgeführten Diazokomponenten auf die Kupplungskomponente des Beispiels 4 kuppelt.

### Beispiel 5

10 g Natriumsalz der 2-(4'-Aminophenyl)-benzthiazol-5-sulfonsäure werden wie in Beispiel 1 diazotiert. Das ausgefallene Diazoniumbetain wird isoliert und als feuchte Paste bei 15°-20° in eine Lösung von 8 g 3-Acetoacetylamino-4-methoxybenzolsulfonsäure in 17 ml Wasser und 8 ml Tris-[2-(hydroxy- ethoxy) ethyl]-amin eingetragen. Durch Zugabe von Tris-[2(2-hydroxy-ethoxy)-ethyl]-amin wird ein pH von 4-5 eingestellt. Man erhält eine lagerstabile Lösung des Farbstoffes der in Beispiel 4 angegebenen Formel, die Papier mit gleich guten Echtheiten anfärbt, wie das in Beispiel 4 beschriebene Pulver des Natriumsalzes.

In analoger Weise können alle in diesem Patent beschriebenen Farbstoffe direkt zur Lösung gekuppelt werden.

### Beispiel 6

### Herstellung von 2-(4'-Aminophenyl)-benzthiazol-6-sulfonsäure :

230 g 2-Amino-benzthiazol-6-sulfonsäure werden in einer Mischung aus 300 ml Wasser und 300 ml Kaliumhydroxid 2 Stunden am Rückfluß gekocht. Die Lösung des Kaliumsalzes der 2-Aminothiophenol-5-sulfonsäure wird auf 20° abgekühlt und mit 180 g 67 %igen 4-Aminobenzaldehyd versetzt. Nach Zugabe von 500 ml 32%iger Salzsäure wird das Reaktionsgemisch 5 Stunden am Rückfluß gekocht. Nach Abkühlen wird das ausgefallene Produkt isoliert und mit Wasser gewaschen. Das Rohprodukt wird in einer Mischung aus 500 ml 20 %igen Ammoniakwasser und 500 ml Wasser auf 90° erwärmt. Die Suspension wird heiß filtriert. Aus dem Filtrat kristallisieren beim Abkühlen 160 g reines Produkt der Formel 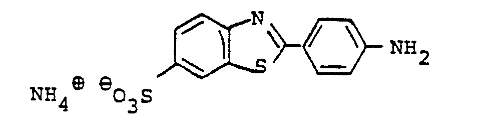 aus.

NMR (DMSO/D₂O) : 6,75 (d, 2H), 7,80 (m, 3H), 7,90 (d, 1H) 8,30 (s, 1H).

### Beispiel 7

### Herstellung von 2-(4'-Aminophenyl)-benzthiazol-5-sulfonsäure :

103 g 2-Aminothiophenol-4-sulfonsäure werden in 500 ml Wasser mit 90 g 67 %igem 4-Aminobenzaldehyd und 250 ml 32 %iger Salzsäure 5 Stunden am Rückfluß gekocht. Nach Abkühlen wird das ausgefallene Produkt isoliert und mit Wasser gewaschen. Das Rohprodukt wird in einer Mischung aus 300 ml Wasser und 150 ml 20 %igen Ammoniakwasser auf 90° erwärmt. Es wird heiß filtriert und das Filtrat noch in der Hitze mit 50 g Kochsalz versetzt. Beim Abkühlen kristallisieren 100 g reines Produkt der Formel 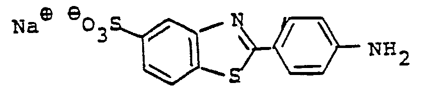 aus.
NMR (DMSO) : = 3,40 (s, 2H),
6,70 (d, 2H),
7,65 (d, 1 H),
7,78 (d, 2H),
7,95 (d, 1 H),
8,12 (s, 1H).

## Patentansprüche

1. Wasserlösliche Monoazofarbstoffe, die in der Form der freien Säure der Formel 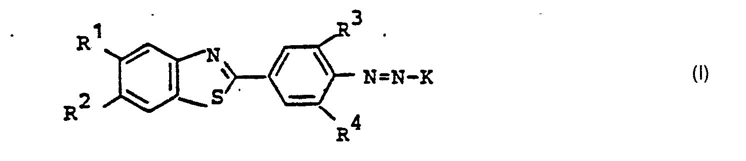 oder einer tautomeren Form derselben entsprechen, worin
R¹, R² = H oder SO₃H
R³, R⁴ = H, Alkyl, Alkoxy, Halogen und
K = Rest einer Kupplungskomponente bedeuten, mit der Maßgabe, daß R₁ und R₂ verschieden sind.

2. Farbstoffe des Anspruchs 1, worin K = Rest einer enolischen Kupplungskomponente, insbesondere einer solchen der Acetessigarylid-, Pyrazolon-, Aminopyrazol-, Pyrazolobenzimidazol-, Pyridon- oder Barbitursäurereihe.

3. Farbstoffe des Anspruchs 1 worin
R¹ = SO₃H
R², R³ = H
R⁴ = H, CH₃, OCH₃ oder CI und
K einen Rest der Formel (II) 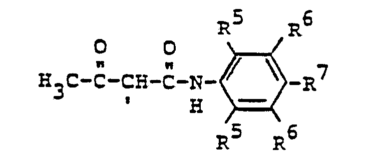 bedeuten, worin
R₅, R₆ = H, C₁-C₄-Alkoxy, insbesondere OCH₃, OC₂H₅, C₁-C₄-Alkyl, insbesondere CH₃, Cl, SO₃H und
R₇ = H, SO₃H, C₁-C₄-Alkoxy, insbesondere OCH₃, Alkylamino, insbesondere C₁-C₄-Alkylcarbony- lamino oder ―NHCO―CH―COCH₃ bedeuten.

4. Farbstoffe des Anspruchs 1 worin
R¹ = SO₃H
R², R³ = H
R⁴ = H, CH₃, OCH₃ oder CI und
K einen Rest der Formel 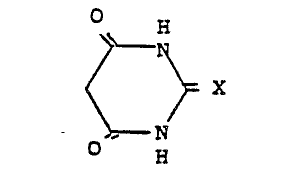 bedeuten, worin X = 0, NH oder N-CN.

5. Farbstoffe der Formel 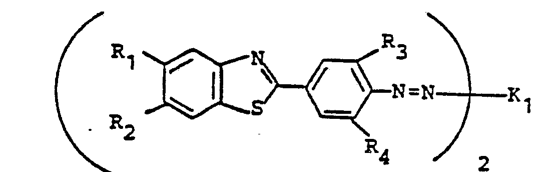 worin
K₁ = CHg―CO―CH―CONH―Ar―NHCO―CHCOCH₃ und
Ar = Arylen, insbesondere gegebenenfalls substituiertes Phenylen, insbesondere Monosulfophenylen.

6. Verwendung der Farbstoffe der Ansprüche 1-5 zum Färben und Bedrucken hydroxylgruppenhaltiger und stickstoffhaltiger Materialien.

7. Mit den Farbstoffen der Ansprüche 1-5 verfärbte und bedruckte hydroxylgruppenhaltige und stickstoffhaltige Materialien.

## Claims

1. Water-soluble monoazo dyestuffs which, in the form of the free acid, correspond to the formula 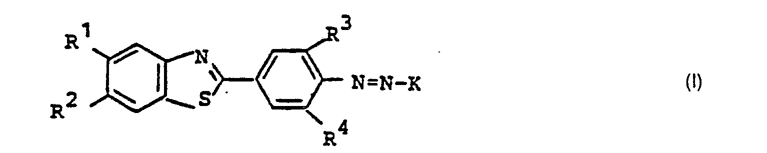 or a tautomeric form thereof, wherein
R¹, R²= H or SO₃H
R³, R⁴ = H, alkyl, alkoxy, halogen and
K = radical of a coupling component, with the proviso that R¹ and R² are different.

2. Dyestuffs of Claim 1, wherein K = radical of an enolic coupling component, in particular of a coupling component of the acetoacetic arylide, pyrazolone, aminopyrazole, pyrazolobenzimidazole, pyridone or barbituric acid series.

3. Dyestuffs of Claim 1 wherein
R' = S0₃H
R2, R³ = H
R⁴ = H, CH₃, OCH₃ or CI and
K denotes a radical of the formula (II) 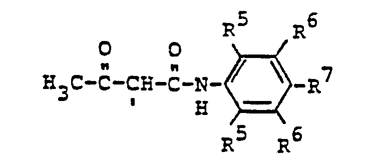 wherein
R⁵, R⁶ = H, C₁-C₄-alkoxy, in particular OCH₃, OC₂H₅, C₁-C₄-alkyl, in particular CH₃, Cl, SO₃H and
R⁷ = H, SO₃H, C₁-C₄-alkoxy, in particular OCH₃, alkylamino, in particular C₁-C₄-alkyl-carbonylamino or ―NHCO―CH―COCH₃.

4. Dyestuffs of Claim 1 wherein
R¹ = SO₃H
_{R}2, R³ = H
R⁴ = H, CH₃, OCH₃ or CI and
K denotes a radical of the formula 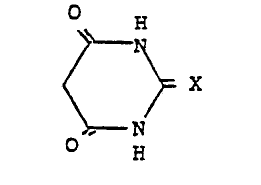 wherein X = 0, NH or N-CN.

5. Dyestuffs of the formula 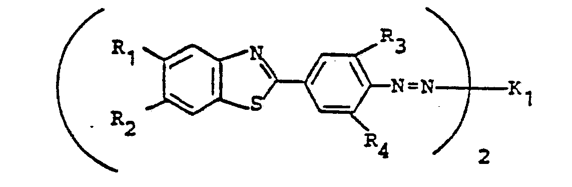 wherein
K₁ = CH₃―CO―CH―CONH―Ar―NHCO―CHCOCH₃ and
Ar = an arylene, in particular optionally substituted phenylene, in particular monosulphophenylene.

6. Use of the dyestuffs of Claims 1-5 for dyeing and printing hydroxyl-group-containing and nitrogen-containing materials.

7. Hydroxyl-group-containing and nitrogen-containing materials dyed and printed with the dyestuffs of Claims 1-5.

## Revendications

1. Colorants monoazoïques hydrosolubles qui, sous la forme de l'acide libre, répondent à la formule 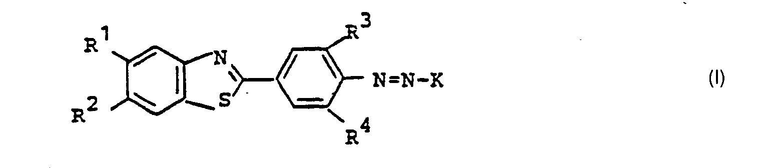 ou à une forme tautomère de cette formule, dans laquelle
R¹, R² = H ou SO₃H
_{R}³, R⁴ = H, alkyle, alkoxy, halogène et
K = reste d'un copulant, sous réserve que R₁ et R₂ soient différents.

2. Colorants suivant la revendication 1, dans lesquels K est le reste d'un copulant énolique. notamment d'un copulant de la série des arylides d'acide acétylacétique, de la pyrazolone, de l'aminopyrazole, du pyrazolobenzimidazole, de la pyridone ou de l'acide barbiturique.

3. Colorants suivant la revendication 1, dans lesquels
R¹ = SO₃H
R², R³ = H
R⁴ = H, CH₃, OCH₃ ou CI et
K est un reste de formule (II) 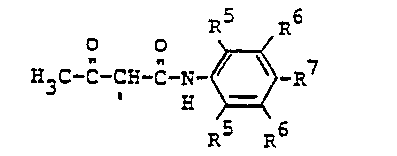 dans laquelle
R₅, R₆ = H, alkoxy en C₁ à C₄, notamment OCH₃, OC₂H₅, alkyle en C₁ à C₄, notamment CH₃, CI, SO₃H, et
R₇ = H, SO₃H, alkoxy en C₁ à C₄, notamment OCH₃, alkylamino, notamment (alkyle en C₁ à C₄)-carbonylamino ou ―NHCO―CH―COCH₃.
4. Colorants suivant la revendication 1, dans lesquels
R¹ = SO₃H
_{R}2, R³ = H
R⁴ = H, CH₃, OCH₃ ou CI et
K est un reste de formule 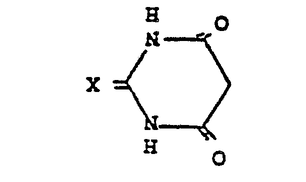 dans laquelle X = O, NH ou N―CN.

5. Colorants de formule 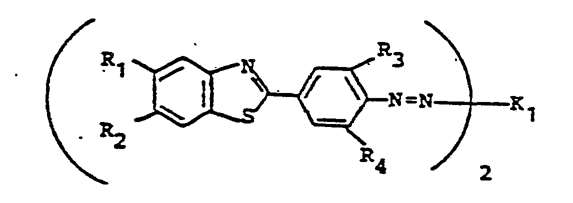 dans laquelle
K, = CH₃―CO―CH―CONH―Ar―NHCO―CHCOCH₃ et
Ar=arylène, notamment phénylène éventuellement substitué, en particulier monosulfophénylène.

6. Utilisation des colorants suivant les revendications 1 à 5 pour la teinture et l'impression de matières portant des groupes hydroxyle et contenant de l'azote.

7. Matières portant des groupes hydroxyle et contenant de l'azote, teintes et imprimées avec les colorants suivant les revendications 1 à 5.
